(19) Europäisches Patentamt / European Patent Office / Office européen des brevets

(11) **EP 2 222 086 A1**

(12) **EUROPÄISCHE PATENTANMELDUNG**

(43) Veröffentlichungstag:
25.08.2010 Patentblatt 2010/34

(51) Int Cl.:
*H04N 7/26* (2006.01)

(21) Anmeldenummer: 09153103.8

(22) Anmeldetag: 18.02.2009

(84) Benannte Vertragsstaaten:
AT BE BG CH CY CZ DE DK EE ES FI FR GB GR
HR HU IE IS IT LI LT LU LV MC MK MT NL NO PL
PT RO SE SI SK TR
Benannte Erstreckungsstaaten:
AL BA RS

(71) Anmelder: EcoDisc Technology AG
8004 Zürich (CH)

(72) Erfinder: Sikora, Thomas, Prof. Dr.
10823 Berlin (DE)

(74) Vertreter: Hess, Peter K. G.
Patent- und Rechtsanwälte
Bardehle - Pagenberg - Dost
Altenburg - Geissler
Galileiplatz 1
81679 München (DE)

(54) **Verfahren und Vorrichtung zur Vermeidung von Rundungsfehlern nach Durchführung einer inversen diskreten orthogonalen Transformation**

(57) Die vorliegende Erfindung stellt ein Verfahren zur Vermeidung von Rundungsfehlern beim Runden von Werten nach Durchführung einer inversen diskreten orthogonalen Transformation bereit. In einem ersten Schritt wird ein Block von Koeffizienten (F'[u][v]) mittels einer inversen diskreten orthogonalen Transformation in einen Block von Bildpunktwerten (f [y][x]) transformiert, wobei jeder Bildpunkt einen Bildpunktwert aufweist. In einem zweiten Schritt wird ein Produkt des Blocks von Bildpunktwerten (f'[y][x]) mit einem ersten Pixelmuster (A[y][x]) gebildet. In einem dritten Schritt werden die Produktwerte des zweiten Schritts zu einer ersten Summe (Suml') aufsummiert. In einem vierten Schritt wird beurteilt, ob die erste Summe (Suml') geradzahlig oder ungeradzahlig ist. In einem fünften Schritt wird, wenn die erste Summe (Suml') geradzahlig ist, ein Block von Manipulationswerten (C[y][x]) zu den Bildpunktwerten des Blocks (f'[y][x]) zum Erzeugen eines manipulierten Blocks von Bildpunktwerten (f[y][x]) addiert oder subtrahiert, wobei der Block von Manipulationswerten (C[y][x]) derart aufgebaut ist, dass Rundungsfehler bei einer nachfolgenden Rundungsoperation vermieden werden.

Fig. 9

**Beschreibung**

**1. Gebiet der Erfindung**

Die vorliegende Erfindung betrifft ein Verfahren zur Vermeidung von Rundungsfehlern nach Durchführung einer inversen diskreten orthogonalen Transformation, sowie eine Codiervorrichtung und eine Decodiervorrichtung, die das Verfahren verwenden.

**2. Technischer Hintergrund**

Auf Grund von Bandbreitenbeschränkungen ist eine Vielzahl von verlustfreien und verlustbehafteten Codierungstechniken für die Übertragung von Bild- und/oder Tonmaterial bekannt, um die zu übertragende Datenmenge zu reduzieren. Viele bekannte Codierverfahren verwenden orthogonale Transformationen, wie z.B. die Fourier-Transformation oder die Kosinus-Transformation.

Aus dem MPEG-1-Video-Standard (ISO/IEC 11172-2) und dem MPEG-2-Video-Standard (ISO/IEC 13818-2) sind unterschiedliche Verfahren bekannt, um Videomaterial von Redundanz zu befreien, seine Datenmenge zu reduzieren und für eine sichere Übertragung über eine Funkstrecke oder ein Speichermedium zu sorgen. Die Inhalte des MPEG-1-Video-Standards (ISO/IEC 11172-2) und des MPEG-2-Video-Standards (ISO/IEC 13818-2) sind hiermit durch Referenz eingebunden. Beide MPEG-Standards schreiben die Verwendung der inversen diskreten Kosinus-Transformation (IDCT) im Decodierer als inverse orthogonale Transformation vor. Sie schreiben jedoch nicht die genaue Implementierung vor, sondern beschreiben lediglich die erforderliche Genauigkeit.

Häufig wird nach Berechnung der inversen diskreten Kosinus-Transformation ein Runden von vorliegenden reellen Zahlen auf ganze Zahlen vorgenommen. Wie die IEEE Standard-Spezifikation für die Implementierung der 8 x 8 inversen diskreten Kosinus-Transformation von 1990, auf die sowohl der MPEG-1-Standard als auch der MPEG-2-Standard Bezug nehmen, beschreibt, kann es beim Runden von Werten, die genau zwischen zwei ganzen Zahlen liegen, zu Fehlern kommen. Es ist bekannt, dass Codierer einen inversen Zweig aufweisen können, der ein bereits codiertes Bild wieder decodiert. In diesem inversen Zweig wird dann wie auch im Decodierer eine inverse diskrete Kosinus-Transformation durchgeführt. Wird nun bei Werten, die genau zwischen zwei ganzen Zahlen liegen, im Codierer anders gerundet als im Decodierer, so entsteht ein Anpassungsfehler, wie es in der IEEE Spezifikation beschrieben ist.

MPEG-1 sieht zur Reduzierung solcher Anpassungsfehler vor, dass alle Koeffizienten vor der IDCT ungeradzahlig gemacht werden. Hierdurch wird die Wahrscheinlichkeit verringert, dass am Ausgang der IDCT-Werte für Bildpunkte auftreten, die genau zwischen zwei ganzen Zahlen liegen.

Die EP 0 638 218 B1 beschreibt ein Verfahren, um einen Satz von Koeffizienten zu verarbeiten, und um einen Fehler-immunen Satz von Koeffizienten für die Verarbeitung durch eine inverse orthogonale Transformation bereitzustellen. Dieser fehler-immune Satz von Koeffizienten ist laut EP 0 638 218 B1 bei der inversen orthogonalen Transformation gegen Rundungsfehler immun. In dem Verfahren der EP 0 638 218 B1 werden die Koeffizienten in einem Satz summiert und die Parität der Summe wird geprüft (d.h. es wird geprüft, ob die Summe ungeradzahlig oder geradzahlig ist). Wenn sich zeigt, dass die Parität der Summe geradzahlig ist, wird die Parität eines der Koeffizienten in dem Satz invertiert, um einen paritäts-invertierten Koeffizienten zu gewinnen. Der paritäts-invertierte Transformationskoeffizient macht die Parität der Summe ungeradzahlig. Schließlich wird der Satz von Koeffizienten, einschließlich des paritäts-invertierten Koeffizienten, als fehler-immuner Satz für die nachfolgende IDCT bereitgestellt.

Die PCT/EP2007/009046 beschreibt ein Verfahren zur Vermeidung von Rundungsfehlern beim Runden von Werten nach Durchführung einer inversen diskreten Kosinus-Transformation. Wie bei dem Verfahren der EP 0 638 218 B1 werden die Koeffizientenwerte eines Blocks von Koeffizienten summiert und die Parität der Summe wird geprüft. Im Unterschied zur EP 0 638 218 B1 wird die Anpassung der Koeffizienten jedoch erst nach der IDCT durch Addieren oder Subtrahieren eines Blocks von Manipulationswerten durchgeführt.

Die JP H09-187 001 offenbart ein Verfahren zur Vermeidung von Rundungsfehlern beim Runden von Werten nach der Durchführung einer inversen diskreten Kosinustransformation. Hier wird nach einer inversen diskreten Kosinustransformation ein exakt berechneter Manipulationswerteblock zu den Bildpunktwerten addiert, bevor eine Rundungsoperation durchgeführt wird. Die Addition des Manipulationswerteblocks vor der IDCT entspricht im Prinzip einer Manipulation des Koeffizienten 7,7 vor der IDCT. Bei Abbildungsungenauigkeiten der IDCT führt dies aber auch der unerwünschten Korrektur anderer Koeffizienten, wobei der 7,7-Koeffizient dominant verändert wird.

**3. Zusammenfassung der Erfindung**

Ausgehend vom Stand der Technik ist es die Aufgabe der vorliegenden Erfindung, ein verbessertes Verfahren zur Vermeidung von Rundungsfehlern im Rahmen der Durchführung einer inversen diskreten orthogonalen Transformation, sowie eine Codiervorrichtung, eine Decodiervorrichtung und ein Computer Programm, die das Verfahren verwenden, bereitzustellen.

Die Aufgabe wird erfindungsgemäß gelöst durch ein Verfahren zur Vermeidung von Rundungsfehlern nach Anspruch 1, einem Verfahren zum Bereitstellen eines komprimierten Videosignals nach Anspruch 9, einem Speichermedium nach Anspruch 10, einer Vorrichtung zur Vermeidung von Rundungsfehlern nach Anspruch 11, einem Decodierer nach Anspruch 12, einem Codierer nach Anspruch 13, und einem Computerprogramm nach Anspruch 14. Bevorzugte Ausführungsformen sind in den abhängigen Patentansprüchen beschrieben.

In einer bevorzugten Ausführungsform umfasst das Verfahren zur Vermeidung von Rundungsfehlern beim Runden von Werten nach Durchführung einer inversen diskreten orthogonalen Transformation die folgenden Schritte in der folgenden Reihenfolge:

a) Transformieren eines Blocks von Koeffizienten (F'[u][v]) mittels einer inversen diskreten orthogonalen Transformation (bevorzugt einer IDCT) in einen Block von Bildpunktwerten (f [y][x]), wobei jeder Bildpunkt einen Bildpunktwert aufweist;

b) Bilden eines Produktes des Blocks von Bildpunktwerten (f'[y][x]) mit einem ersten Pixelmuster (A[y][x]);

c) Aufsummieren der Produktwerte aus Schritt b) zu einer ersten Summe (Suml');

d) Beurteilen, ob die ersten Summe (Sum1') geradzahlig oder ungeradzahlig ist; und

e) wenn die erste Summe (Sum1') geradzahlig ist, Addieren oder Subtrahieren eines Blocks von Manipulationswerten (C[y][x]) zu den Bildpunktwerten des Blocks (f'[y][x]) zum Erzeugen eines manipulierten Blocks von Bildpunktwerten (f[y][x]), wobei der Block von Manipulationswerten (C[y][x]) derart aufgebaut ist, dass Rundungsfehler bei einer nachfolgenden Rundungsoperation minimiert werden.

Das erfindungsgemäße Verfahren hat den Vorteil, dass sowohl die Entscheidung für eine Rundungsfehlerkorrektur als auch die Korrektur selbst erst nach der inversen diskreten orthogonalen Transformation (z.B. einer IDCT), also im Bildpunktbereich, erfolgt. Hierdurch lassen sich sowohl das erste Pixelmuster A[y][x] als auch der Manipulationswerteblock C [y] [x] auf die Präzision der verwendeten IDCT-Algorithmen optimal anpassen.

Weiterhin entfällt dadurch das Speichern des Wertes der Parität der Summe von Koeffizientenwerten, welcher im Stand der Technik vor der inversen diskreten orthogonalen Transformation bestimmt wird. Zusätzlich dazu muss dieser Wert nicht umständlich, z.B. durch zusätzliche Hardware, an die Vorrichtung zur Vermeidung von Rundungsfehlern übergeben werden. Die Vorrichtung kann als abgeschlossenes Modul in den Decodierer und den Codierer auf Bildpunktbereich integriert werden und braucht auf keine Signale aus dem DCT-Koeffizientenbereich, also vor der IDCT, zurückgreifen.

Da die inverse diskrete orthogonale Transformation, insbesondere die IDCT in realen Anwendungen nur mit endlicher Genauigkeit durchgeführt wird, sind auch die Anforderungen an die Rechenleistung eines Prozessors, der die Bestimmung der Parität nach der Transformation durchführt und der die Koeffizienten anpasst, niedriger als im Stand der Technik.

In einer weiteren bevorzugten Ausführungsform des Verfahrens werden in Schritt e), wenn die erste Summe (Sum1') geradzahlig ist, die folgenden Schritte durchgeführt:

e1) Bilden eines Produkt des Blocks von Bildpunktwerten (f'[y][x]) mit einem zweiten Pixelmuster (B[y][x]);

e2) Aufsummieren der Produktwerten aus Schritt e1) zu einer zweiten Summe (Sum2'); wobei

e3) wenn die zweite Summe (Sum2') geradzahlig ist, der Block von Manipulationswerten (C[y][x]) zu dem Block von Bildpunktwerten (f'[y][x]) hinzuaddiert wird; und

e4) wenn die zweite Summe (Sum2') ungeradzahlig ist, der Block von Manipulationswerten (C[y][x]) von dem Block von Bildpunktwerten subtrahiert wird.

Das Beurteilen der Parität des Produktes der Bildpunktwerte mit dem zweiten Pixelmuster erhöht die Sicherheit, Rundungsfehler durch die nachfolgende Rundung zu vermeiden. Auch in dieser bevorzugten Ausführungsform wird ein Zurückgreifen auf Signale aus dem DCT-Koeffizientenbereich (vor der IDCT) vermieden, wodurch eine Speicherung und Weiterleitung des Signals vor der IDCT eingespart wird.

Weiterhin ist das Produkt des Blocks von Bildpunktwerten mit einem zweiten Pixelmuster einfach und schnell zu berechnen, insbesondere weil für das zweite Pixelmuster immer die gleiche Matrix verwendet werden kann. Diese Art der Fallunterscheidung ist daher in der Implementierung sehr schnell.

In einer ersten bevorzugten Ausführungsform des Verfahrens ist das erste Pixelmuster (A[y][x]) und/oder das zweite Pixelmuster (B[y][x]) und/oder der Block von Manipulationswerten (C[y][x]) eine numerisch oder analytisch optimierte Matrix ist. Mit Hilfe numerisch oder analytisch optimierter Matrizen können wiederum gegenüber dem Stand der Technik viele Rechenschritte eingespart werden, so dass das Verfahren zur Rundungsfehlervermeidung wesentlich schneller abläuft als mit exakt berechneten Matrizen. Die verwendeten Matrizen können zudem in Abhängigkeit der Genauigkeit der Implementierung der IDCT optimiert werden, wobei die Rundungsfehlervermeidung trotz der Einsparung an Rechenschritten genauso gut oder besser funktioniert als bei den herkömmlichen Verfahren zur Rundungsfehlervermeidung. Mit optimierten Matrizen und der Rundungsfehlervermeidung auf Bildpunktebene ist es nicht mehr notwendig exakt einen Koeffizienten, z.B. den Koeffizienten 7,7, zu manipulieren, so dass die IDCT oft schon früher abgebrochen werden kann, was wiederum zu einer Verringerung der durchzuführenden Rechenschritte führt.

In einer anderen bevorzugten Ausführungsform ist die Matrix des ersten Pixelmusters (A[y][x]) und/oder des zweiten Pixelmusters (B[y][x]) und/oder des Blocks von Manipulationswerten (C[y][x]) durch die Gradient Descent Methode; und/oder stochastische Programmierung numerisch optimiert und/oder durch die Wiener Filter Methode analytisch optimiert. Durch diese Verfahren lassen sich auf numerischem Wege oder analytisch für den jeweiligen Anwendungsfall optimierte Matrizen generieren. Diese können insbesondere auf die Implementierungsgenauigkeit der IDCT optimal angepasst sein.

In einer bevorzugten Ausführungsform ist die Matrix des ersten Pixelmusters (A[y][x]) die folgende Matrix:

| 6.98 | -1.90 | 1.50 | -0.53 | 0.81 | -0.08 | 0.47 | 0.21 |
|---|---|---|---|---|---|---|---|
| -1.90 | 0.52 | -0.41 | 0.15 | -0.22 | 0.00 | -0.13 | -0.06 |
| 1.51 | -0.41 | 0.33 | -0.12 | 0.18 | -0.00 | 0.10 | 0.05 |
| -0.53 | 0.15 | -0.15 | 0.00 | -0.06 | 0.00 | -0.00 | -0.00 |
| 0.82 | -0.22 | 0.18 | -0.06 | 0.10 | -0.00 | 0.06 | 0.00 |
| -0.08 | 0.00 | -0.00 | 0.00 | -0.00 | 0.00 | -0.00 | -0.00 |
| 0.47 | -0.13 | 0.10 | -0.00 | 0.06 | -0.00 | 0.00 | 0.00 |
| 0.21 | -0.06 | 0.05 | -0.00 | 0.00 | -0.00 | 0.00 | 0.00 |

In einer bevorzugten Ausführungsform besteht das zweite Pixelmuster (B[y][x]) aus einer quadratischen, symmetrischen Matrix, bevorzugt aus der folgenden Matrix:

| 0.0095 | -0.0271 | 0.0406 | -0.0478 | 0.0478 | -0.0406 | 0.0271 | -0.0095 |
|---|---|---|---|---|---|---|---|
| -0.0271 | 0.0772 | -0.1155 | 0.1362 | -0.1362 | 0.1155 | -0.0772 | 0.0271 |
| 0.0406 | -0.1155 | 0.1728 | -0.2039 | 0.2039 | -0.1728 | 0.1155 | -0.0406 |
| -0.0478 | 0.1362 | -0.2039 | 0.2405 | -0.2405 | 0.2039 | -0.1362 | 0.0478 |
| 0.0478 | -0.1362 | 0.2039 | -0.2405 | 0.2405 | -0.2039 | 0.1362 | -0.0478 |
| -0.0406 | 0.1155 | -0.1728 | 0.2039 | -0.2039 | 0.1728 | -0.1155 | 0.0406 |
| 0.0271 | -0.0772 | 0.1155 | -0.1362 | 0.1362 | -0.1155 | 0.0772 | -0.0271 |
| -0.0095 | 0.0271 | -0.0406 | 0.0478 | -0.0478 | 0.0406 | -0.0271 | 0.0095 |

In einer bevorzugten Ausführungsform besteht der Manipulationswerteblock (C[y][x]) aus einer quadratischen, symmetrischen Matrix, bevorzugt aus der folgenden Matrix:

| 0.0000 | 0.0000 | 0.0000 | 0.0000 | 0.0000 | 0.0000 | 0.0000 | 0.0000 |
|---|---|---|---|---|---|---|---|
| 0.0000 | 0.0000 | -0.1155 | 0.1362 | -0.1362 | 0.1155 | 0.0000 | 0.0000 |
| 0.0000 | -0.1155 | 0.1728 | -0.2039 | 0.2039 | -0.1728 | 0.1155 | 0.0000 |
| 0.0000 | 0.1362 | -0.2039 | 0.2405 | -0.2405 | 0.2039 | -0.1362 | 0.0000 |
| 0.0000 | -0.1362 | 0.2039 | -0.2405 | 0.2405 | -0.2039 | 0.1362 | 0.0000 |
| 0.0000 | 0.1155 | -0.1728 | 0.2039 | -0.2039 | 0.1728 | -0.1155 | 0.0000 |
| 0.0000 | 0.0000 | 0.1155 | -0.1362 | 0.1362 | -0.1155 | 0.0000 | 0.0000 |
| 0.0000 | 0.0000 | 0.0000 | 0.0000 | 0.0000 | 0.0000 | 0.0000 | 0.0000 |

In einer anderen bevorzugten Ausführungsform des Verfahrens ist das erste Pixelmuster (A[y][x]) eine Matrix, die aus der Summe der Basisbilder der DCT (F' [u] [v]) an der jeweiligen Stelle ([y] [x]) besteht.

In einer weiteren bevorzugten Ausführungsform des Verfahrens ist das zweite Pixelmuster (B[x][y]) eine Matrix, die dem Basisbilde der DCT für den Koeffizienten F'[7][7] besteht.

In einer weiteren bevorzugten Ausführungsform des Verfahrens weist das Verfahren weiterhin folgenden Schritt auf:

f) Runden jedes manipulierten Bildpunktwertes des manipulierten Blocks von Bildpunktwerten (f[y][x]) auf eine ganze Zahl.

In einer bevorzugten Ausführungsform umfasst ein Verfahren zum Bereitstellen eines komprimierten Videosignals die folgenden Schritte:

a) Durchführen von Vorhersagecodierung mittels Vergleich aufeinanderfolgender Bilder;

b) Transformieren von Bildblöcken mittels einer diskreten Kosinus-Transformation in Blöcke von Transformationskoeffizienten;

c) Durchführen des oben beschriebenen Verfahrens zur Vermeidung von Rundungsfehlern in einem inversen Zweig eines Codierers, in dem ein codiertes Bild decodiert wird.

Durch dieses Verfahren wird von einem Codierer ein komprimiertes Videosignal bereitgestellt, welches die Vorteile der erfindungsgemäßen Codierung bietet.

In einer bevorzugten Ausführungsform ist auf dem Speichermedium das komprimierte Videosignal gespeichert, das mittels des oben beschriebenen Verfahrens codiert wurde.

Eine weitere bevorzugte Ausführungsform ist eine Vorrichtung zur Vermeidung von Rundungsfehlern beim Runden von Werten nach Durchführung einer inversen diskreten orthogonalen Transformation, wobei die Vorrichtung Mittel zum erfindungsgemäßen Durchführen des Verfahrens umfasst.

In einer bevorzugten Ausführungsform wird in einem Decodierer das erfindungsgemäße Verfahren zur Vermeidung von Rundungsfehlern durchgeführt.

In einer bevorzugten Ausführungsform wird in einem Codierer das erfindungsgemäße Verfahren zur Vermeidung von Rundungsfehlern durchgeführt.

In einer bevorzugten Ausführungsform weist ein Computer Programm Befehle auf, so dass es, bei seiner Ausführung auf einem Computer, die Schritte des erfindungsgemäßen Verfahrens ausführt.

## 4. Kurze Beschreibung der Zeichnungen

Die beigefügten Zeichnungen dienen lediglich zur Veranschaulichung und zum besseren Verständnis der vorliegenden Erfindung und ihrer Vorteile. Es zeigen:

Fig. 1    eine schematische Darstellung eines Codierers, in dem die vorliegende Erfindung verwendet wird;

Fig. 2    eine schematische Darstellung eines Decodierers, in dem die vorliegende Erfindung verwendet wird;

Fig. 3    eine schematische Darstellung der Anordnung der Rundungsfehlervermeidung in einem Codierer/Decodierer;

Fig. 4    eine schematische Darstellung der Rundungsfehlervermeidung gemäß der vorliegenden Erfindung;

Fig. 5    eine Abbildung eines ersten Pixelmusters gemäß der vorliegenden Erfindung;

Fig. 6    eine Abbildung eines optimierten ersten Pixelmusters gemäß der vorliegenden Erfindung;

Fig. 7    eine Abbildung eines zweiten Pixelmusters gemäß der vorliegenden Erfindung;

Fig. 8    eine Abbildung eines Blocks von Manipulationswerten gemäß der vorliegenden Erfindung;

Fig. 9    ein Flussdiagramm, das das Verfahren zur Vermeidung von Rundungsfehlern gemäß der vorliegenden Erfindung illustriert; und

Fig. 10    ein Flussdiagramm, das ein Verfahren zur Optimierung der Matrizen der Rundungsfehlervermeidung illustriert.

**5. Detaillierte Beschreibung bevorzugter Ausführungsformen**

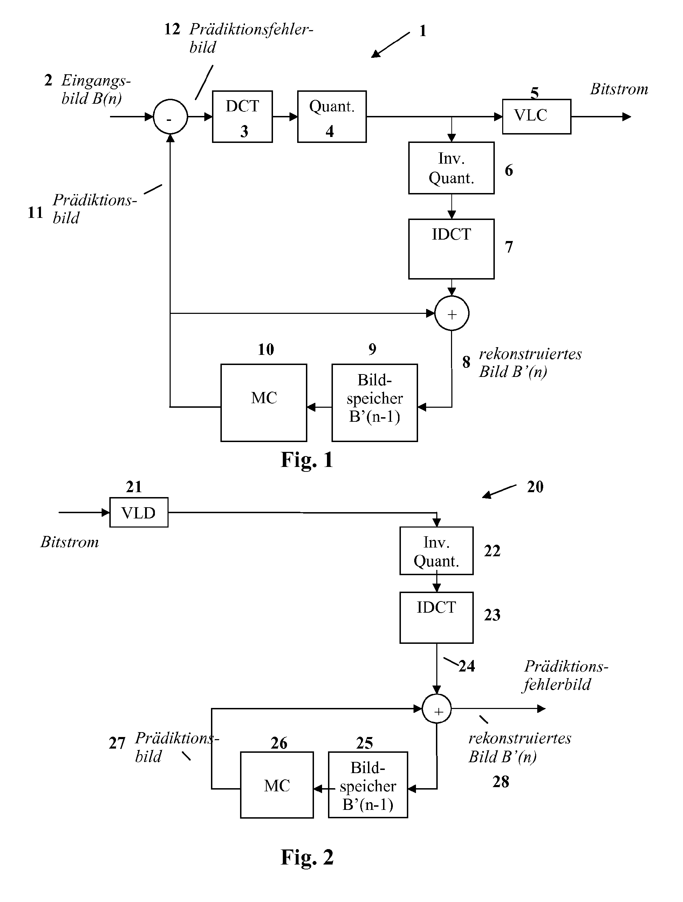

In Fig. 1 ist schematisch die Struktur eines typischen Video-Codierers 1 dargestellt. Eine Möglichkeit, Video-Bilder zu codieren, stellt z.B. eine Codierung gemäß MPEG dar. Die folgende Beschreibung wird nur zur Veranschaulichung auf dem Hintergrund einer Video-Codierung gemäß MPEG ausgeführt, ohne dass der Anwendungsbereich der vorliegenden Erfindung auf eine solche Codierung beschränkt ist. Der MPEG-2-Standard sieht drei verschiedene Typen von Bildern für die Codierung vor, nämlich I-, P- und B-Bilder. I-Bilder werden unabhängig von anderen Bildern codiert, sie werden einer so genannten Intra-Codierung unterzogen. P-Bilder werden aus einem vorhergehenden I-Bild oder P-Bild prädiziert, sie sind also von einem zeitlich vorhergehenden I-Bild oder P-Bild abhängig. B-Bilder können von einem vorhergehenden und/oder einem nachfolgendem I- bzw. P-Bild abhängig sein.

Wenn ein Video-Codierer 1, wie er in Fig. 1 dargestellt ist, für eine derartige MPEG-Codierung eingesetzt wird, wird z.B. bei P-Bildern nicht das Eingangsbild, sondern ein Prädiktionsfehlerbild 12 codiert und übertragen. Aus einem bereits übertragenen Bild in einem Bildspeicher 9 wird mittels Bewegungskompensation (MC-Motion Compensation) 10 ein Prädiktionsbild 11 erzeugt. Verschiebungen von einem Bild zu einem anderen Bild werden durch Bewegungsvektoren beschrieben. Die Differenz von Eingangsbild 2 und Prädiktionsbild 11 ergibt das Prädiktionsfehlerbild 12. Die Pixelwerte des Prädiktionsfehlerbildes 12 werden mittels DCT 3 transformiert und ergeben einen Block von Koeffizienten. Diese werden in einem Quantisierer 4 quantisiert. Die quantisierten Koeffizienten und die Bewegungsvektoren werden mittels eines VLC (Variable Length Coder) 5 in Codeworte umgewandelt und ergeben den Bitstrom zur Speicherung oder Übertragung. Jedes zum Decodierer 20 übersandte Bild muss auch im Bildspeicher 9 des Codierers 1 möglichst empfängergetreu für die nächste Prädiktion zur Verfügung stehen. Aus diesem Grund beinhaltet der Codierer 1 auch einen lokalen Decodierer, der das Decodierbild B'(n) 8 rekonstruiert. Der lokale Decodierer beinhaltet einen inversen Quantisierer 6 und eine Vorrichtung zur Durchführung einer IDCT 7. Das erfindungsgemäße Verfahren zur Vermeidung von Rundungsfehlern beim Runden von Werten nach Durchführung der inversen diskreten orthogonalen Transformation, hier im Speziellen einer IDCT, wird im Bereich des lokalen Decodierers, der den inversen Quantisierer 6 und die IDCT 7 aufweist, eingesetzt. Ein Vergleich mit Fig. 2 zeigt, dass die lokalen Decodier-Blöcke des Codierers mit denen des Decodierers prinzipiell übereinstimmen.

Figur 2 zeigt schematisch die grundlegende Struktur eines typischen Video-Decodierers 20. Der eingehende Bitstrom transportiert unter anderem Informationen über Bewegungsvektoren und Prädiktionsfehlerbilder. Ein Variable Length Decodierer (VLD) 21 wandelt den Bitstrom in Quantisiererwerte und Bewegungsvektoren um. Die Quantisiererwerte werden durch den inversen Quantisierer 22 in einen Block von Koeffizienten und danach mittels einer IDCT 23 in Pixel des Prädiktionsfehlerbildes 24 umgewandelt. Das rekonstruierte Bild 28 ergibt sich aus der Addition des Prädiktionsbildes 27 und des Prädiktionsfehlerbildes 24. Das Prädiktionsbild 27 wird mittels Bewegungskompensation (MC-Motion Compensation) 26 aus dem vorhergehenden rekonstruierten Bild, das im Bildspeicher 25 gespeichert ist, erzeugt. Genau wie bei dem Codierer 1 wird auch im Decodierer 20 das erfindungsgemäße Verfahren zur Vermeidung von Rundungsfehlern beim Runden von Werten nach Durchführung der IDCT im Bereich der IDCT 23 eingesetzt.

Wie aus den Fig. 1 und 2 ersichtlich ist, enthält sowohl der Codierer 1 als auch der Decodierer 20 einen IDCT-Block 7 bzw. 23. Aus den Koeffizienten, die der inversen Quantisierung unterzogen wurden, werden mit Hilfe der IDCT Pixelwerte (oder auch Bildpunktwerte genannt) rekonstruiert. Diese Berechnung findet mit endlicher Genauigkeit statt.

Um den Rechen- und Speicheraufwand bei der weiteren Verarbeitung zu reduzieren, werden die mittels IDCT 7, 23 erhaltenen Pixelwerte gerundet. Bevorzug wird jeder Pixelwert auf eine ganze Zahl gerundet. Eine solche Rundung wird sowohl im Codierer 1 als auch im Decodierer 20 vorgenommen. Die Implementierungen der IDCT 7, 23 sowie der nachfolgenden Rundungsoperation können jedoch im Codierer 1 und im Decodierer 20 unterschiedlich sein, da sie z.B. von unterschiedlichen Herstellern hergestellt sein können. Auf Grund solcher unterschiedlichen Implementierungen kann es bei Werten, die in einem kleinen Bereich genau zwischen zwei Werten liegen, auf die gerundet werden kann, zu unterschiedlichen Ergebnissen kommen. Es kann somit von der Implementierung der Rundungsoperation und der IDCT - insbesondere deren Genauigkeit - abhängen, ob ein Wert aufgerundet oder abgerundet wird. Liegt im Codierer 1 und im Decodierer 20 nach der Rundung ein unterschiedlicher Wert vor, so spricht man von einem Anpassungsfehler.

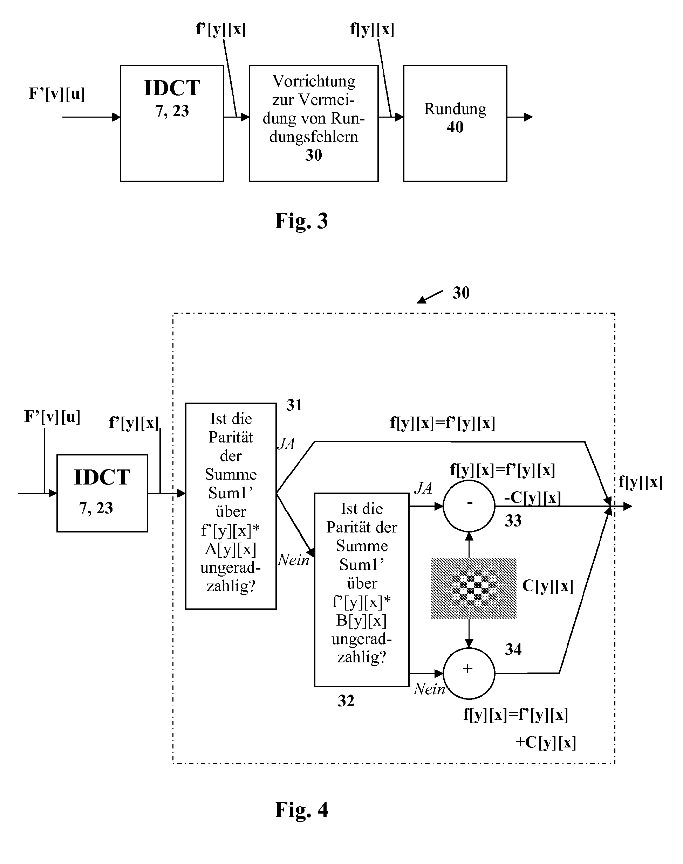

Figur 3 beschreibt die Anordnung der Vorrichtung zur Vermeidung von Rundungsfehlern 30 im Bereich des lokalen Decodierers des Codierers 1 oder des Decodierers 20. Es wird deutlich, dass das gesamte von der Vorrichtung 30 ausgeführte Verfahren nach der Vorrichtung zur Ausführung der IDCT 7, 23 und vor der Rundungsvorrichtung 40 angeordnet ist. Da die Vorrichtung 30 als Modul hinter der IDCT Vorrichtung 7, 23 liegt, benötigt sie keinerlei Information des DCT Signals. Somit ist weder eine physische Verbindung zum Abgreifen des DCT Signals für die Vorrichtung zur Vermeidung von Rundungsfehlern 30 nötig, welche die IDCT-Vorrichtung 7, 23 umgehen müsste, noch muss ein separater Speicher bereit gestellt werden, der das Ergebnis eine Beurteilung der Parität des DCT Signals für die Rundungsfehlervermeidung speichert. Das Modul 30 ist signaltechnisch autark und hat als Eingangsgröße ausschließlich die Bildpunktwerte f'[y][x].

Figur 4 beschreibt eine bevorzugte Ausgestaltung der Vorrichtung zur Vermeidung von Rundungsfehlern 30 gemäß der vorliegenden Erfindung, durch die das Auftreten von Anpassungsfehlern reduziert werden kann. Ein Block von Koeffizientenwerten F'[u][v], wird der IDCT 7, 23 unterworfen. Es sei angemerkt, dass die IDCT nur ein Beispiel für eine erfindungsgemäß allgemein verwendbare inverse diskrete orthogonale Transformation der Koeffizienten F'[u][v] ist. Das Ergebnis der IDCT 7, 23 ist ein Block von Bildpunktwerten f'[y][x], die bevorzugt als reelle Zahlen mit endlicher Genauigkeit vorliegen.

Danach wird eine erste Summe Sum1' über die Werte des Produkts des Blocks von Bildpunktwerten f'[v][u] mit einem ersten Pixelmuster A[y][x] gebildet. Dann wird in einer Paritätsbeurteilungsvorrichtung 31 beurteilt, ob der Wert der erste Summe Sum1' gerade oder ungerade ist. Wenn die erste Summe Sum1' eine ungerade Zahl ist, bleiben die Bildpunktwerte unverändert, es gilt f[y][x] = f'[y][x]. Ist die erste Summe Sum1' jedoch gerade, so wird zusätzlich eine zweite Summe Sum2' über die Werte des Produkts des Blocks von Bildpunktwerten f'[y][x] mit einem zweiten Pixelmuster B[y][x] gebildet und in einer Paritätsbeurteilungsvorrichtung 32 beurteilt. Wenn der Wert dieser zweiten Summe Sum2' gerade ist, wird zu dem Block von Bildpunktwerten f'[y][x] ein Block von Manipulationswerten C[y][x] durch einen Addierer/Subtrahierer 32 hinzuaddiert, um einen manipulierten Bildpunktwerteblock zu erhalten, f[y][x] = f'[y][x] + C[y][x]. Wenn der Wert dieser zweiten Summe Sum2' ungerade ist, wird von dem Block von Bildpunktwerten f'[y][x] ein Block von Manipulationswerten C[y][x] durch einen Addierer/Subtrahierer 32 subtrahiert, um einen manipulierten Bildpunktwerteblock zu erhalten, f[y][x] = f'[y][x] - C[y][x].

Die manipulierten Bildpunktwerte f[y][x] werden nachfolgend gerundet. Durch die Manipulation der Bildpunktwerte wird vermieden, dass Bildpunktwerte genau zwischen zwei ganzen Zahlen liegen bzw. in einem kleinem Bereich genau zwischen ganzen Zahlen. Hierdurch wird das Ergebnis der Rundungsoperation unabhängig von der Implementierung der IDCT 7, 23 und der nachfolgenden Rundungsoperation, wodurch die vorliegende Erfindung das Auftreten von Anpassungsfehlem minimiert. Die IDCT ist daher robust gegenüber Rundungsfehlern.

In dem Ausführungsbeispiel von Fig. 4 wird, wenn die Summe der Koeffizientenwerte des Produkts des Blocks von Bildpunktwerten f'[y][x] mit einem ersten Pixelmuster A[y][x], wobei y und x ganze Zahlen im Bereich 0, 1, ..., 7 sind, geradzahlig ist, den rekonstruierten Pixelwerten im 8x8 Block f'[y][x] ein 8x8 festes Bildmuster C[y][x] überlagert. Die Rundung auf ganze Zahlen wird auf Basis der manipulierten Bildpunktwerte f[y][x] durchgeführt.

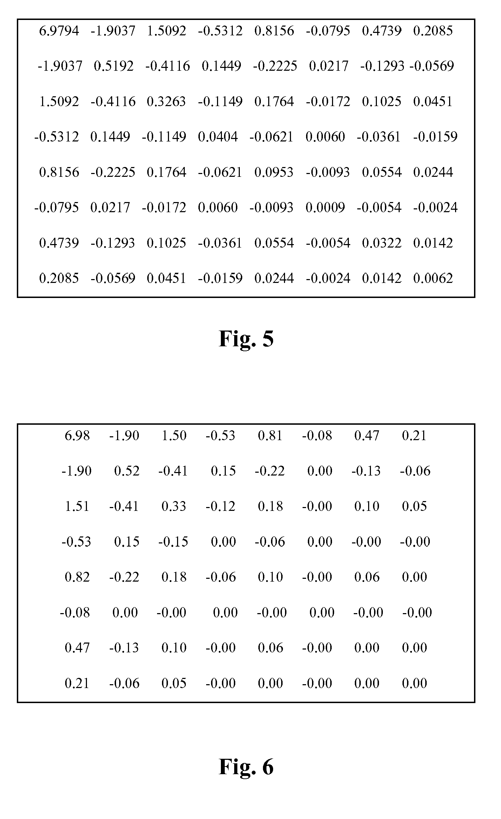

Fig. 5 zeigt ein Beispiel für ein erstes Pixelmuster, wie es im Rahmen der vorliegenden Erfindung eingesetzt werden kann. Die Werte sind zur besseren Übersichtlichkeit auf vier Nachkommastellen gerundet. Das Beispiel in Fig. 5 ist nicht beschränkend zu verstehen, sondern es soll lediglich ein besonders vorteilhaftes Pixelmuster beschreiben. Am Beispiel der Fig. 5 wird ebenfalls deutlich, dass im Rahmen einer 8x8 IDCT bevorzugt eine quadratische Matrix A[y][x] der Größe 8x8 verwendet wird, die symmetrisch ist.

Fig. 6 zeigt das Beispiel eines ersten Pixelmuster aus Fig. 5, wobei die Werte numerisch optimiert wurden.

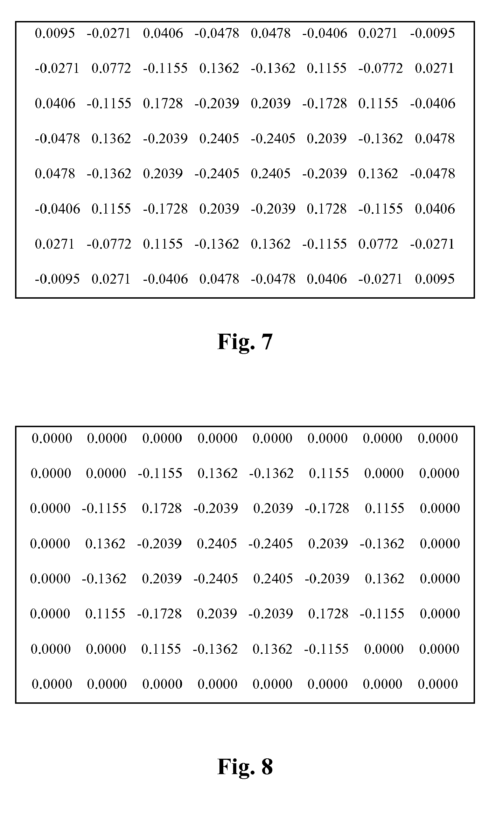

Fig. 7 zeigt ein Beispiel für ein zweites Pixelmuster B[y][x], wie es im Rahmen der vorliegenden Erfindung eingesetzt werden kann. Die Werte sind zur besseren Übersichtlichkeit auf vier Stellen nach dem Komma gerundet. Auch das Beispiel in Fig. 5 ist als nicht beschränkend zu verstehen, sondern soll lediglich ein besonders vorteilhaftes erstes Pixelmuster beschreiben. Am Beispiel der Fig. 7 wird ebenfalls deutlich, dass im Rahmen einer 8x8 IDCT bevorzugt eine quadratische Matrix B[y][x] der Größe 8x8 verwendet wird, die symmetrisch ist. Die Vorzeichen der einzelnen Werte sind wie ein Schachbrettmuster angeordnet, wobei der Wert oben links ein positives Vorzeichen aufweist. Zudem nehmen die Werte der abgebildeten Matrix betraglich nach außen hin ab.

Fig. 8 zeigt ein Beispiel für einen Block von Manipulationswerten C[y][x], wie er im Rahmen der vorliegenden Erfindung eingesetzt werden kann. Die Werte sind auch hier zur besseren Übersichtlichkeit auf vier Nachkommastellen gerundet. Das Beispiel in Fig. 8 ist nicht beschränkend zu verstehen, sondern es soll lediglich einen besonderes vorteilhaften Block von Manipulationswerten beschreiben. Die exakt zu verwendenden Werte können z.B. durch eine numerische Optimierung erzeugt werden. Am Beispiel der numerisch optimierten Matrix der Fig. 8 wird ebenfalls deutlich, dass im Rahmen einer 8x8 IDCT bevorzugt eine quadratische Matrix von Manipulationswerten C[y][x] der Größe 8x8 verwendet wird, die symmetrisch ist. Die Vorzeichen der einzelnen Werte sind wie ein Schachbrettmuster angeordnet, wobei der Wert oben links ein positives Vorzeichen aufweist. Zudem nehmen die Werte der abgebildeten Matrix betraglich nach außen hin ab.

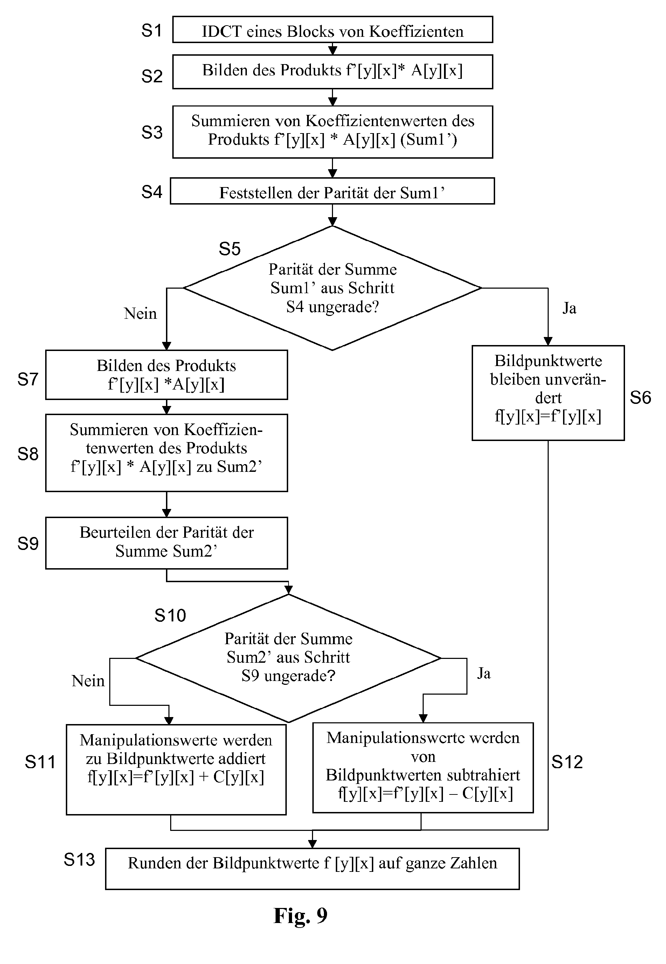

Figur 9 zeigt ein Flussdiagramm, in dem der Ablauf des erfindungsgemäßen Verfahrens, wie es in dem Codierer 1 bzw. dem Decodierer 20 eingesetzt wird, veranschaulicht ist.

In Schritt S1 werden die Koeffizienten F'[v][u] mittels IDCT 7 bzw. 23 in einen Block von Bildpunktwerten f'[y][x] transformiert. In Schritt S2 wird das Produkt des Blocks von Bildpunktwerten f'[y][x] mit einem ersten Pixelmuster A[y][x] gebildet. Das erste Pixelmuster A[y][x] ist eine Matrix mit Werten welche es ermöglicht, dass der Block von Bildpunktwerten f'[y][x] nach der IDCT auf Parität überprüft werden kann. Ein typisches Ausführungsbeispiel für eine solche Matrix wird in Fig. 5 und 6 gegeben.

Mathematisch ist beispielsweise A[y][x] in Fig. 5 die Summe der Basisbilder der DCT (bzw. IDCT) an der Stelle [y][x] und ergibt sich wie folgt, wobei $I_B[y][x][u][v]$ das [u][v]-te Basisbild der DCT (bzw. der IDCT) and der Stelle [y][x] repräsentiert:

$$\sum_{u=0}^{7}\sum_{v=0}^{7}F'[u][v]=\sum_{y=0}^{7}\sum_{x=0}^{7}f'[y][x]\cdot\sum_{u=0}^{7}\sum_{v=0}^{7}I_{B}[u][v][y][x]$$

$$\Leftrightarrow A[y][x]=\sum_{u=0}^{7}\sum_{v=0}^{7}I_{B}[u][v][y][x]$$

$A[y][x]$ in Fig. 6 weicht hingegen von der mathematisch berechneten Matrix ab und wurde mit einem numerischen oder analytischen Verfahren optimiert, um eine robuste Rundungsfehlervermeidung bei gleichzeitig geringem Rechenaufwand zu gewährleisten.

Für eine numerische Optimierung der verwendeten Matrizen kann beispielsweise die Gradient Descent Methode oder eine stochastische Optimierung verwendet werden. Für eine analytische Optimierung der verwendeten Matrizen kann beispielsweise die Wiener Filter Methode verwendet werden.

In Schritt S3 werden die Koeffizientenwerte des Produkts aus S2 aufsummiert, d.h. die erste Summe Sum1' wird gebildet. In Schritt S4 wird die Parität der ersten Summe Sum1' bestimmt. Ist die Parität der ersten Summe Sum1' ungerade, folgt Schritt S6 und die Bildpunktwerte bleiben unverändert, es gilt $f[y][x] = f'[y][x]$. Ist die erste Summe Sum1' jedoch gerade, so wird in Schritt S7 zusätzlich das Produkt des Blocks von Bildpunktwerten $f'[y][x]$ mit einem zweiten Pixelmuster $B[y][x]$ gebildet.

Ein typisches Ausführungsbeispiel für eine solche Matrix wird in Fig. 7 gegeben. Mathematisch ist $B[y][x]$ in Fig. 7 das $[7][7]$-te Basisbild der DCT (bzw. IDCT) an der Stelle $[y][x]$ und ergibt sich wie folgt:

$$F'[7][7]=\sum_{y=0}^{7}\sum_{x=0}^{7}f'[y][x]\cdot I_{B}[7][7][y][x]$$

$$\Leftrightarrow B[y][x]=I_{B}[7][7][y][x]$$

Wie oben beschrieben kann $B[y][x]$ von der mathematisch berechneten Matrix abweichen und bevorzugt mit einem numerischen oder analytischen Verfahren optimiert sein, um eine robuste Rundungsfehlervermeidung bei gleichzeitig geringem Rechenaufwand zu gewährleisten.

In Schritt S8 wird eine zweite Summe Sum2' über die Koeffizientenwerte des Produkts des Blocks von Bildpunktwerten und des zweiten Pixelmuster $(B[y][x])$ gebildet. Wiederum wird in Schritt S9 beurteilt, ob der Wert der zweiten Summe Sum2' gerade oder ungerade ist. Ist die zweite Summe Sum2' gerade, so wird zu dem Block von Bildpunktwerten $f'[y][x]$ in Schritt S11 ein Block von Manipulationswerten $C[y][x]$ hinzuaddiert, $f[y][x] = f'[y][x] + C[y][x]$. Ist die zweite Summe Sum2' ungerade, so wird der Block von Manipulationswerten $C[y][x]$ in Schritt S12 davon abgezogen, $f[y][x] = f'[y][x] - C[y][x]$, um einen manipulierten Block von Bildpunktwerten zu erhalten.

Ein Beispiel für einen Block von Manipulationswerten $C[y][x]$ wird in Fig. 8 gegeben. Auch der Block von Manipulationswerten $C[y][x]$ in Fig. 8 ist mittels eines numerischen oder analytischen Verfahrens optimiert worden, um eine robuste Rundungsfehlervermeidung bei gleichzeitig geringem Rechenaufwand zu gewährleisten.

Anschließend an die Schritte S11, S12 und S7 werden die manipulierten Bildpunktwerte $f[y][x]$ in Schritt S13 gerundet. Hierbei wird jede Zahl, deren erste Nachkommastelle größer oder gleich 5 ist, auf die nächst größere ganze Zahl gerundet, während jede Zahl, deren erste Nachkommastelle kleiner als 5 ist, auf die nächst kleinere ganze Zahl gerundet wird. Durch die Manipulation der Bildpunktwerte wird vermieden, dass Bildpunktwerte genau zwischen zwei ganzen Zahlen liegen bzw. in einem kleiner Bereich genau zwischen ganzen Zahlen. Hierdurch wird das Ergebnis der Rundungsoperation unabhängig von der Implementierung der IDCT 7, 23 und der nachfolgenden Rundungsoperation, wodurch die vorliegende Erfindung das Auftreten von Anpassungsfehlern minimiert.

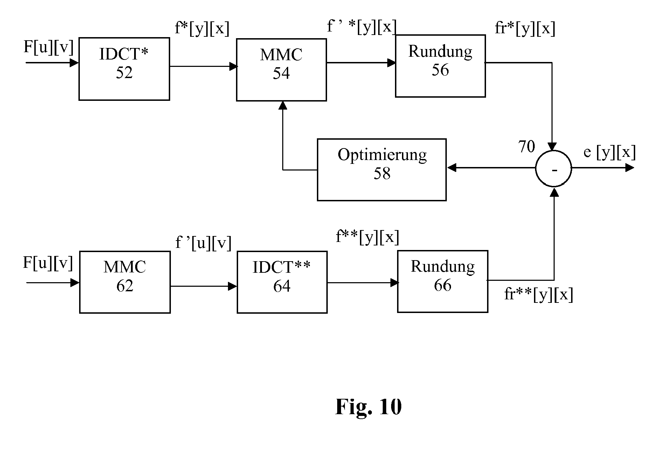

In Fig. 10 ist dargestellt wie eine numerische oder analytische Optimierung der verwendeten Matrizen $A[y][x]$, $B[y][x]$ und $C[y][x]$ überprüft werden kann.

Im oberen Teil der Fig. 10 ist mit den Verfahrensschritten 52, 54 und 56 die IDCT 52 mit erfindungsgemäßer Rundungsfehlervermeidung (MMC = Mismatch Control) 54 und Rundung 56 eines Kodierers dargestellt. Im unteren Teil der Fig. 10 ist die konventionelle MPEG2-Rundungsfehlervermeidung 62 eines Dekodierers vor der IDCT 64 und nachfolgender Rundung 66 dargestellt. Die IDCT* 64 kann hierbei zur IDCT** 52 unterschiedlich implementiert sein, insbesondere eine andere Genauigkeit aufweisen.

Bei identischem eingehenden Koeffizienten-Bitstrom F[u][v] wird beim erfindungsgemäßen Verfahren zunächst eine IDCT 52 durchgeführt und dann Rundungsfehlervermeidung 54 im Pixelbereich durchgeführt, bevor die eigentliche Rundung 56 durchgeführt wird. Beim gewöhnlichen MPEG2-Verfahren wird zunächst im Koeffizientenbereich die Rundungsfehlervermeidung 62 und dann die IDCT 64 durchgeführt, bevor die eigentliche Rundung 66 erfolgt. Um nun die in der Rundungsfehlervermeidung 54 verwendeten Matrizen verwendeten Matrizen A[y][x], B[y][x] und C[y][x] zu optimieren wird in der Operation 70 das jeweilige Ergebnis der beiden IDCT Verfahren miteinander verglichen und ein Fehler e[y][x] berechnet. Danach wird im Block 58 eine numerische oder analytische Optimierung der Matrizen A[y][x], B[y][x] und C[y][x] vorgenommen, bis der sich ergebende Fehler e[y] [x] minimiert wird.

Damit können die optimalen Matrizen A[y][x], B[y][x] und C[y][x] für eine Kodierung nach dem erfindungsgemäßen Verfahren ermittelt werden.

**Patentansprüche**

1. Verfahren zur Vermeidung von Rundungsfehlern beim Runden von Werten nach Durchführung einer inversen diskreten orthogonalen Transformation (7, 23), wobei das Verfahren die folgenden Schritte in der folgenden Reihenfolge umfasst:

   a) Transformieren eines Blocks von Koeffizienten (F'[u][v]) mittels einer inversen diskreten orthogonalen Transformation (7, 23) in einen Block von Bildpunktwerten (f'[y][x]), wobei jeder Bildpunkt einen Bildpunktwert aufweist (S1);
   b) Bilden eines Produktes des Blocks von Bildpunktwerten (f'[y][x]) mit einem ersten Pixelmuster (A[y][x]) (S2);
   c) Aufsummieren der Produktwerte aus Schritt b) (S3) zu einer ersten Summe (Sum1');
   d) Beurteilen ob die erste Summe (Sum1') geradzahlig oder ungeradzahlig ist (S4); und
   e) wenn die erste Summe (Sum1') geradzahlig ist, Addieren oder Subtrahieren eines Blocks von Manipulationswerten (C[y][x]) zu den Bildpunktwerten des Blocks (f'[y][x]) zum Erzeugen eines manipulierten Blocks von Bildpunktwerten (f[y][x]), wobei der Block von Manipulationswerten (C[y][x]) derart aufgebaut ist, dass Rundungsfehler bei einer nachfolgenden Rundungsoperation minimiert werden (S11, S12, S 13).

2. Verfahren nach Anspruch 1, wobei in Schritt e), wenn die erste Summe (Sum1') geradzahlig ist, die folgenden Schritte durchgeführt werden:

   e1) Bilden eines Produkts des Blocks von Bildpunktwerten (f [y][x]) mit einem zweiten Pixelmuster (B[y][x]) (S7);
   e2) Aufsummieren der Produktwerten aus Schritt e1) (S8) zu einer zweiten Summe (Sum2'); wobei
   e3) wenn die zweite Summe (Sum2') geradzahlig ist (S9, S10), der Block von Manipulationswerten (C[y][x]) zu dem Block von Bildpunktwerten (f'[y][x]) hinzuaddiert (S 11) wird; und
   e4) wenn die zweite Summe (Sum2') ungeradzahlig ist (S9, S10), der Block von Manipulationswerten (C[y][x]) von dem Block von Bildpunktwerten subtrahiert (S 12) wird.

3. Verfahren nach einem der Ansprüche 1 oder 2, wobei das erste Pixelmuster (A[y][x]) und/oder das zweite Pixelmuster (B[y][x]) und/oder der Block von Manipulationswerten (C[y][x]) eine numerisch oder analytisch optimierte Matrix ist.

4. Verfahren nach Anspruch 3, wobei die Matrix des ersten Pixelmusters (A[y][x]) und/oder des zweiten Pixelmusters (B[y][x]) und/oder des Blocks von Manipulationswerten (C[y][x]) durch
   die Gradient Descent Methode; und/oder
   stochastische Programmierung numerisch optimiert ist; und/oder durch
   die Wiener Filter Methode analytisch optimiert ist.

5. Verfahren nach einem der Ansprüche 3 oder 4, wobei die Matrix des ersten Pixelmusters (A[y][x]) die folgende Matrix ist:

| 6.98 | -1.90 | 1.50 | -0.53 | 0.81 | -0.08 | 0.47 | 0.21 |
|------|-------|-------|-------|-------|-------|-------|-------|
| -1.90 | 0.52 | -0.41 | 0.15 | -0.22 | 0.00 | -0.13 | -0.06 |
| 1.51 | -0.41 | 0.33 | -0.12 | 0.18 | -0.00 | 0.10 | 0.05 |
| -0.53 | 0.15 | -0.15 | 0.00 | -0.06 | 0.00 | -0.00 | -0.00 |

(fortgesetzt)

| 0.82 | -0.22 | 0.18 | -0.06 | 0.10 | -0.00 | 0.06 | 0.00 |
|---|---|---|---|---|---|---|---|
| -0.08 | 0.00 | -0.00 | 0.00 | -0.00 | 0.00 | -0.00 | -0.00 |
| 0.47 | -0.13 | 0.10 | -0.00 | 0.06 | -0.00 | 0.00 | 0.00 |
| 0.21 | -0.06 | 0.05 | -0.00 | 0.00 | -0.00 | 0.00 | 0.00 |

6. Verfahren nach einem der Ansprüche 2 bis 5, wobei das zweite Pixelmuster (B[y][x]) aus einer quadratischen, symmetrischen Matrix besteht, bevorzugt aus der folgenden Matrix:

| 0.0095 | -0.0271 | 0.0406 | -0.0478 | 0.0478 | -0.0406 | 0.0271 | -0.0095 |
|---|---|---|---|---|---|---|---|
| -0.0271 | 0.0772 | -0.1155 | 0.1362 | -0.1362 | 0.1155 | -0.0772 | 0.0271 |
| 0.0406 | -0.1155 | 0.1728 | -0.2039 | 0.2039 | -0.1728 | 0.1155 | -0.0406 |
| -0.0478 | 0.1362 | -0.2039 | 0.2405 | -0.2405 | 0.2039 | -0.1362 | 0.0478 |
| 0.0478 | -0.1362 | 0.2039 | -0.2405 | 0.2405 | -0.2039 | 0.1362 | -0.0478 |
| -0.0406 | 0.1155 | -0.1728 | 0.2039 | -0.2039 | 0.1728 | -0.1155 | 0.0406 |
| 0.0271 | -0.0772 | 0.1155 | -0.1362 | 0.1362 | -0.1155 | 0.0772 | -0.0271 |
| -0.0095 | 0.0271 | -0.0406 | 0.0478 | -0.0478 | 0.0406 | -0.0271 | 0.0095 |

7. Verfahren nach einem der vorhergehenden Ansprüche, wobei der Manipulationswerteblock (C[y][x]) aus einer quadratischen, symmetrischen Matrix besteht, bevorzugt aus der folgenden Matrix:

| 0.0000 | 0.0000 | 0.0000 | 0.0000 | 0.0000 | 0.0000 | 0.0000 | 0.0000 |
|---|---|---|---|---|---|---|---|
| 0.0000 | 0.0000 | -0.1155 | 0.1362 | -0.1362 | 0.1155 | 0.0000 | 0.0000 |
| 0.0000 | -0.1155 | 0.1728 | -0.2039 | 0.2039 | -0.1728 | 0.1155 | 0.0000 |
| 0.0000 | 0.1362 | -0.2039 | 0.2405 | -0.2405 | 0.2039 | -0.1362 | 0.0000 |
| 0.0000 | -0.1362 | 0.2039 | -0.2405 | 0.2405 | -0.2039 | 0.1362 | 0.0000 |
| 0.0000 | 0.1155 | -0.1728 | 0.2039 | -0.2039 | 0.1728 | -0.1155 | 0.0000 |
| 0.0000 | 0.0000 | 0.1155 | -0.1362 | 0.1362 | -0.1155 | 0.0000 | 0.0000 |
| 0.0000 | 0.0000 | 0.0000 | 0.0000 | 0.0000 | 0.0000 | 0.0000 | 0.0000 |

8. Verfahren nach einem der vorhergehenden Ansprüche, wobei das Verfahren weiterhin folgenden Schritt aufweist:

f) Runden jedes manipulierten Bildpunktwertes des manipulierten Blocks von Bildpunktwerten (f[y][x]) auf eine ganze Zahl (S13).

9. Verfahren zum Bereitstellen eines komprimierten Videosignals, das die folgenden Schritte aufweist:

a) Durchführen von Vorhersagecodierung mittels Vergleich aufeinanderfolgender Bilder;
b) Transformieren von Bildblöcken mittels einer diskreten Kosinus-Transformation in Blöcke von Transformationskoeffizienten;
c) Durchführen des Verfahrens zur Vermeidung von Rundungsfehlern nach einem der vorhergehenden Ansprüche 1 - 8 in einem inversen Zweig eines Codierers, in dem ein codiertes Bild decodiert wird.

10. Speichermedium, auf dem das komprimierte Videosignal nach Anspruch 9 gespeichert ist.

11. Vorrichtung zur Vermeidung von Rundungsfehlern (30) beim Runden von Werten nach Durchführung einer inversen diskreten orthogonalen Transformation (7, 23), wobei die Vorrichtung Mittel zum Durchführen des Verfahrens nach einem der Ansprüche 1 bis 9 umfasst.

12. Decodierer (1), in dem zur Vermeidung von Rundungsfehlern das Verfahren nach einem der Ansprüche 1 bis 8 durchgeführt wird.

**13.** Codierer (20), in dem zur Vermeidung von Rundungsfehlern das Verfahren nach einem der Ansprüche 1 bis 9 durchgeführt wird.

**14.** Computerprogramm aufweisend Befehle, das, bei seiner Ausführung auf einem Computer, die Schritte des Verfahrens nach einem der Ansprüche 1 bis 9 ausführt.

**12** *Prädiktionsfehler-bild*

**1**

**2** *Eingangs-bild B(n)*

DCT **3**

Quant. **4**

**5** VLC

*Bitstrom*

Inv. Quant. **6**

IDCT **7**

**11** *Prädiktions-bild*

+

**8** *rekonstruiertes Bild B'(n)*

**10** MC

**9** Bild-speicher B'(n-1)

**Fig. 1**

**21** VLD

**20**

*Bitstrom*

Inv. Quant. **22**

IDCT **23**

**24**

*Prädiktions-fehlerbild*

+

**27** *Prädiktions-bild*

**26** MC

**25** Bild-speicher B'(n-1)

*rekonstruiertes Bild B'(n)* **28**

**Fig. 2**

f'[y][x]        f[y][x]

F'[v][u] → | **IDCT** **7, 23** | → | Vorrichtung zur Vermei- dung von Run- dungsfehlern **30** | → | Rundung **40** | →

**Fig. 3**

30

F'[v][u]    f'[y][x]

→ | **IDCT** **7, 23** | →

**31**

| Ist die Parität der Summe Sum1' über f'[y][x]* A[y][x] ungerad- zahlig? |

*JA*    f[y][x]=f'[y][x]

*Nein*

**32**

| Ist die Parität der Summe Sum1' über f'[y][x]* B[y][x] ungerad- zahlig? |

*JA*    f[y][x]=f'[y][x] -C[y][x]

( − )    **33**

C[y][x]

( + )    **34**

*Nein*    f[y][x]=f'[y][x] +C[y][x]

f[y][x]

**Fig. 4**

| | | | | | | | |
|---|---|---|---|---|---|---|---|
| 6.9794 | -1.9037 | 1.5092 | -0.5312 | 0.8156 | -0.0795 | 0.4739 | 0.2085 |
| -1.9037 | 0.5192 | -0.4116 | 0.1449 | -0.2225 | 0.0217 | -0.1293 | -0.0569 |
| 1.5092 | -0.4116 | 0.3263 | -0.1149 | 0.1764 | -0.0172 | 0.1025 | 0.0451 |
| -0.5312 | 0.1449 | -0.1149 | 0.0404 | -0.0621 | 0.0060 | -0.0361 | -0.0159 |
| 0.8156 | -0.2225 | 0.1764 | -0.0621 | 0.0953 | -0.0093 | 0.0554 | 0.0244 |
| -0.0795 | 0.0217 | -0.0172 | 0.0060 | -0.0093 | 0.0009 | -0.0054 | -0.0024 |
| 0.4739 | -0.1293 | 0.1025 | -0.0361 | 0.0554 | -0.0054 | 0.0322 | 0.0142 |
| 0.2085 | -0.0569 | 0.0451 | -0.0159 | 0.0244 | -0.0024 | 0.0142 | 0.0062 |

**Fig. 5**

| | | | | | | | |
|---|---|---|---|---|---|---|---|
| 6.98 | -1.90 | 1.50 | -0.53 | 0.81 | -0.08 | 0.47 | 0.21 |
| -1.90 | 0.52 | -0.41 | 0.15 | -0.22 | 0.00 | -0.13 | -0.06 |
| 1.51 | -0.41 | 0.33 | -0.12 | 0.18 | -0.00 | 0.10 | 0.05 |
| -0.53 | 0.15 | -0.15 | 0.00 | -0.06 | 0.00 | -0.00 | -0.00 |
| 0.82 | -0.22 | 0.18 | -0.06 | 0.10 | -0.00 | 0.06 | 0.00 |
| -0.08 | 0.00 | -0.00 | 0.00 | -0.00 | 0.00 | -0.00 | -0.00 |
| 0.47 | -0.13 | 0.10 | -0.00 | 0.06 | -0.00 | 0.00 | 0.00 |
| 0.21 | -0.06 | 0.05 | -0.00 | 0.00 | -0.00 | 0.00 | 0.00 |

**Fig. 6**

| 0.0095 | -0.0271 | 0.0406 | -0.0478 | 0.0478 | -0.0406 | 0.0271 | -0.0095 |
|---|---|---|---|---|---|---|---|
| -0.0271 | 0.0772 | -0.1155 | 0.1362 | -0.1362 | 0.1155 | -0.0772 | 0.0271 |
| 0.0406 | -0.1155 | 0.1728 | -0.2039 | 0.2039 | -0.1728 | 0.1155 | -0.0406 |
| -0.0478 | 0.1362 | -0.2039 | 0.2405 | -0.2405 | 0.2039 | -0.1362 | 0.0478 |
| 0.0478 | -0.1362 | 0.2039 | -0.2405 | 0.2405 | -0.2039 | 0.1362 | -0.0478 |
| -0.0406 | 0.1155 | -0.1728 | 0.2039 | -0.2039 | 0.1728 | -0.1155 | 0.0406 |
| 0.0271 | -0.0772 | 0.1155 | -0.1362 | 0.1362 | -0.1155 | 0.0772 | -0.0271 |
| -0.0095 | 0.0271 | -0.0406 | 0.0478 | -0.0478 | 0.0406 | -0.0271 | 0.0095 |

**Fig. 7**

| 0.0000 | 0.0000 | 0.0000 | 0.0000 | 0.0000 | 0.0000 | 0.0000 | 0.0000 |
|---|---|---|---|---|---|---|---|
| 0.0000 | 0.0000 | -0.1155 | 0.1362 | -0.1362 | 0.1155 | 0.0000 | 0.0000 |
| 0.0000 | -0.1155 | 0.1728 | -0.2039 | 0.2039 | -0.1728 | 0.1155 | 0.0000 |
| 0.0000 | 0.1362 | -0.2039 | 0.2405 | -0.2405 | 0.2039 | -0.1362 | 0.0000 |
| 0.0000 | -0.1362 | 0.2039 | -0.2405 | 0.2405 | -0.2039 | 0.1362 | 0.0000 |
| 0.0000 | 0.1155 | -0.1728 | 0.2039 | -0.2039 | 0.1728 | -0.1155 | 0.0000 |
| 0.0000 | 0.0000 | 0.1155 | -0.1362 | 0.1362 | -0.1155 | 0.0000 | 0.0000 |
| 0.0000 | 0.0000 | 0.0000 | 0.0000 | 0.0000 | 0.0000 | 0.0000 | 0.0000 |

**Fig. 8**

S1 | IDCT eines Blocks von Koeffizienten

S2 | Bilden des Produkts f'[y][x]* A[y][x]

S3 | Summieren von Koeffizientenwerten des Produkts f'[y][x] * A[y][x] (Sum1')

S4 | Feststellen der Parität der Sum1'

S5 | Parität der Summe Sum1' aus Schritt S4 ungerade?

Nein

Ja

S7 | Bilden des Produkts f'[y][x] *A[y][x]

S6 | Bildpunktwerte bleiben unverändert f[y][x]=f'[y][x]

S8 | Summieren von Koeffizientenwerten des Produkts f'[y][x] * A[y][x] zu Sum2'

S9 | Beurteilen der Parität der Summe Sum2'

S10 | Parität der Summe Sum2' aus Schritt S9 ungerade?

Nein

Ja

S11 | Manipulationswerte werden zu Bildpunktwerte addiert f[y][x]=f'[y][x] + C[y][x]

S12 | Manipulationswerte werden von Bildpunktwerten subtrahiert f[y][x]=f'[y][x] – C[y][x]

S13 | Runden der Bildpunktwerte f [y][x] auf ganze Zahlen

**Fig. 9**

F[u][v] → | IDCT* 52 | — f*[y][x] → | MMC 54 | — f'*[y][x] → | Rundung 56 | — fr*[y][x] →

| Optimierung 58 |

70 ⊖ — e [y][x]

F[u][v] → | MMC 62 | — f'[u][v] → | IDCT** 64 | — f**[y][x] → | Rundung 66 | — fr**[y][x]

**Fig. 10**

Europäisches
Patentamt

European
Patent Office

Office européen
des brevets

## EUROPÄISCHER RECHERCHENBERICHT

**Nummer der Anmeldung**

EP 09 15 3103

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 0 784 410 A (TEKTRONIX INC [US]) 16. Juli 1997 (1997-07-16) * Zusammenfassung * * Seite 2, Zeilen 25-28 * * Seite 3, Zeilen 21-35 * ----- | 1-14 | INV. H04N7/26 |
| Y | WO 94/21083 A (SONY CORP [JP]) 15. September 1994 (1994-09-15) * Zusammenfassung * * Seiten 23-26 * ----- | 1-14 | |
| A | EP 1 143 738 A (MATSUSHITA ELECTRIC IND CO LTD [JP]) 10. Oktober 2001 (2001-10-10) * das ganze Dokument * ----- | 1-14 | |
| Y | JP 09 187001 A (SONY CORP) 15. Juli 1997 (1997-07-15) * das ganze Dokument * ----- | 1-14 | |
| X | WO 2008/046622 A (ODS TECHNOLOGY GMBH [DE]; SIKORA THOMAS [DE]) 24. April 2008 (2008-04-24) * das ganze Dokument * ----- | 1-14 | **RECHERCHIERTE SACHGEBIETE (IPC)** H04N G06F |

Der vorliegende Recherchenbericht wurde für alle Patentansprüche erstellt

| Recherchenort | Abschlußdatum der Recherche | Prüfer |
|---|---|---|
| München | 10. August 2009 | Lindgren, Johan |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

...............................................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**          EP 09 15 3103

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-08-2009

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| EP 0784410 | A | | 16-07-1997 | US | 5822005 | A | 13-10-1998 |
| WO 9421083 | A | | 15-09-1994 | AT | 185663 | T | 15-10-1999 |
| | | | | AT | 252806 | T | 15-11-2003 |
| | | | | AU | 673244 | B2 | 31-10-1996 |
| | | | | AU | 6116194 | A | 26-09-1994 |
| | | | | BR | 9404321 | A | 27-07-1999 |
| | | | | CA | 2134444 | A1 | 15-09-1994 |
| | | | | CN | 1106988 | A | 16-08-1995 |
| | | | | DE | 69421135 | D1 | 18-11-1999 |
| | | | | DE | 69421135 | T2 | 25-05-2000 |
| | | | | DE | 69433272 | D1 | 27-11-2003 |
| | | | | DE | 69433272 | T2 | 12-08-2004 |
| | | | | DK | 638218 | T3 | 31-01-2000 |
| | | | | DK | 0903944 | T3 | 01-03-2004 |
| | | | | EG | 20330 | A | 31-10-1998 |
| | | | | EP | 0638218 | A1 | 15-02-1995 |
| | | | | ES | 2137358 | T3 | 16-12-1999 |
| | | | | ES | 2209032 | T3 | 16-06-2004 |
| | | | | FI | 945106 | A | 30-12-1994 |
| | | | | GR | 3032133 | T3 | 27-04-2000 |
| | | | | HK | 1013575 | A1 | 22-09-2000 |
| | | | | HU | 76452 | A2 | 29-09-1997 |
| | | | | IL | 108787 | A | 13-07-1997 |
| | | | | JP | 3610578 | B2 | 12-01-2005 |
| | | | | JP | 7506954 | T | 27-07-1995 |
| | | | | NO | 944138 | A | 23-12-1994 |
| | | | | NO | 20010762 | A | 23-12-1994 |
| | | | | NZ | 261907 | A | 25-09-1996 |
| | | | | OA | 10108 | A | 18-12-1996 |
| | | | | PL | 306007 | A1 | 20-02-1995 |
| | | | | PT | 903944 | E | 31-03-2004 |
| | | | | RO | 115926 | B1 | 28-07-2000 |
| | | | | RU | 2119727 | C1 | 27-09-1998 |
| | | | | TR | 28436 | A | 24-06-1996 |
| | | | | US | 5481553 | A | 02-01-1996 |
| EP 1143738 | A | | 10-10-2001 | CN | 1318946 | A | 24-10-2001 |
| | | | | JP | 2001285867 | A | 12-10-2001 |
| | | | | KR | 20010093772 | A | 29-10-2001 |
| | | | | TW | 520608 | B | 11-02-2003 |
| | | | | US | 6456663 | B1 | 24-09-2002 |
| JP 9187001 | A | | 15-07-1997 | KEINE | | | |
| WO 2008046622 | A | | 24-04-2008 | DE | 102006049232 | A1 | 08-05-2008 |

EPO FORM P0461

Für nähere Einzelheiten zu diesem Anhang : siehe Amtsblatt des Europäischen Patentamts, Nr.12/82

**ANHANG ZUM EUROPÄISCHEN RECHERCHENBERICHT
ÜBER DIE EUROPÄISCHE PATENTANMELDUNG NR.**

EP 09 15 3103

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-08-2009

| Im Recherchenbericht angeführtes Patentdokument | Datum der Veröffentlichung | Mitglied(er) der Patentfamilie | Datum der Veröffentlichung |
|---|---|---|---|
| WO 2008046622 A | | US 2009198757 A1 | 06-08-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0638218 B1
- EP 2007009046 W

- JP H09187001 B